# EUROPEAN PATENT APPLICATION

(11) **EP 2 372 046 A1**
(43) Date of publication of application: **05.10.2011**
(21) Application number: 09834926.9
(22) Date of filing: 24.12.2009
(51) Int. Cl.: E04H 6/18, E04H 6/42

(54) **VEHICLE PARKING DEVICE**

(30) Priority: 26.12.2008 JP 2008333838
(71) Applicant: IHI Transport Machinery Co., Ltd., Tokyo 104-0044 (JP)
(72) Inventor: OTSUKA, Morio, Tokyo 104-0044 (JP)
(74) Representative: Grünecker, Kinkeldey, Stockmair & Schwanhäusser Anwaltssozietät
(86) International application number: PCT/JP2009/071404
(87) International publication number: WO 2010/074128

(57) **Abstract**

A conventional parking system for parking vehicles comprises a plurality of parking spaces, a moving unit capable of moving a vehicle from one of the parking spaces to another parking space, a plurality of relay circuits provided respectively corresponding to the plurality of vehicles and capable of respectively relaying electrical power to the vehicles, and an electrical power-feed circuit for supplying electrical power to an electrical power-feed parking space, being at least one of the parking spaces among the plurality of parking spaces, and capable of supplying electrical power to vehicles via the relay circuits provided in correspondence with vehicles placed in the electrical power-feed parking spaces, wherein electrical power-feed reservations, which are a declaration of intent to the effect that is desired to supply electrical power to a vehicle, are respectively received for each vehicle, and after moving a vehicle for which an electrical power-feed reservation has been received from the parking space to the electrical power-feed parking space, the electrical power-feed circuit commences electrical power-feed to the vehicle via the relay circuit and terminates electrical power-feed when a specified condition is satisfied.

With this structure, it is possible to provide a parking system suitable for supplying electrical power to vehicles, with a simple structure.

## Description

### TECHNICAL FIELD

The present invention relates to a parking system for parking vehicles. The present invention particularly relates to a parking system characterized by being configured to feed electrical power to vehicles.

### BACKGROUND ART

A mechanical parking system may be used to park vehicles.
In mechanical parking systems, there are vertically circulating parking systems, elevator type parking systems, underground parking systems, and others.
A loading and unloading station is provided at an convenient position in a transfer space.
Vehicles are loaded and unloaded at the loading and unloading station.

In recent years, as well as vehicles having fossil fuel as an energy source, vehicles with electricity as an energy source are being used.
An electric vehicle is one vehicle having electricity as an energy source.
Electric vehicles travel using electricity stored in a rechargeable battery.
There is therefore a need to charge the rechargeable battery while the vehicle is parked.
However, not all parked vehicles are electric vehicles, or it may be desired to supply electric power to only some electric vehicles at the time of parking.
Also, the time required to supply electrical power may sometimes be shorter than the parking time.
There is also a need for sufficient control of electrical power-feed circuits used in feeding electrical power in order to deliver performance.

Related Patent publication is as follows Utility Model Laid-open No. H06-035535

### DISCLOSURE OF THE INVENTION

The present invention has been conceived in view of the above-described problems and provides a parking system suitable for supplying electrical power to vehicles, with a simple structure.

In order to achieve the above-described object, a parking system for parking vehicles of the present invention comprises a plurality of parking spaces in which it is possible to respectively place a plurality of vehicles, a moving unit capable of moving a vehicle from one parking space among the plurality of parking spaces to another parking space, a plurality of relay circuits provided respectively corresponding to the plurality of vehicles and that can respectively relay electrical power to the vehicles, and an electrical power-feed circuit for supplying electrical power to an electrical power-feed parking space, being at least one of the parking spaces among the plurality of parking spaces, and capable of supplying electrical power to vehicles via the relay circuits provided in correspondence with vehicles placed in the electrical power-feed parking spaces, wherein electrical power-feed reservations, which are a declaration of intent to the effect that is desired to supply electrical power to a vehicle, are respectively received for each vehicle, and after transferring a vehicle for which an electrical power-feed reservation has been received from the parking space to the electrical power-feed parking space, the electrical power-feed circuit commences electrical power-feed to the vehicle via the relay circuits and terminates electrical power-feed when a specified condition is satisfied.

With the above-described structure it is possible to respectively place a plurality of vehicles in a plurality of parking spaces. The moving unit can move a vehicle from one parking space among the plurality of parking spaces to another parking space. The plurality of relay circuits are provided respectively corresponding to the plurality of vehicles and can respectively supply electrical power to the vehicles. The electrical power-feed circuit supplies electrical power to an electrical power-feed parking space, which is at least one parking space among the plurality of parking spaces, and can supply electrical power to a vehicle via the relay circuits provided in correspondence with the vehicles that have been placed in the electrical power-feed parking spaces. Electrical power-feed reservations, which are declarations of intent to the effect that it is desired to supply electrical power to a vehicle, are respectively received for each vehicle, and after a vehicle for which the electrical power-feed reservation has been received has been moved from the parking space to the electrical power-feed parking space, the electrical power-feed circuit commences electrical power-feed to the vehicle via the relay circuit, and terminates electrical power-feed when a specified condition is satisfied.
As a result, while vehicles are parked in the parking spaces, it is possible to sequentially move vehicles that desire electrical power-feed to the electrical power-feed parking spaces and supply electrical power.

A plurality of parking systems of embodiments of the present invention will be described in the following. The present invention includes any of the embodiments described below, or a combination of two or more of these embodiments.

A parking system of an embodiment of the present invention is provided with a control unit for handling a plurality of corresponding identification codes so as to be able to respectively identify a plurality of vehicles, and controlling the parking system, the control unit respectively receiving electrical power-feed reservations, being a declaration of intent to the effect that it is desired to feed electrical power to a vehicle, for every vehicle, storing additionally an identification code corresponding to a vehicle for which an electrical power-feed reservation has been received in a standby table, extracting one of the identification codes from among the plurality of identification codes stored in the standby table, and when the electrical power-feed circuit has commenced electrical power-feed to the vehicle via a relay circuit after a vehicle corresponding to the extracted identification code has been moved from the parking space to the electrical power-feed parking space and terminated electrical power-feed once a specified condition has been satisfied, deleting the identification code of the vehicle for which electrical power-feed has been terminated from the standby table.
With the structure of the above-described embodiment, the control unit handles a plurality of corresponding identification codes so as to be able to respectively identify a plurality of vehicles, and controls the parking system. Electrical power-feed reservations, being declarations of intent to the effect that it is desired to supply electrical power to a vehicle, are respectively received for each vehicle. An identification code corresponding to a vehicle for which an electrical power-feed reservation has been received is stored additionally in the standby table. One of the identification codes is extracted from among the plurality of identification codes that have been stored in the standby table. After a vehicle corresponding to the extracted identification code has been moved from the parking space to the electrical power-feed parking space, the electrical power-feed circuit commences electrical power-feed to the vehicle via the relay circuit, and terminates electrical power-feed when a specified condition is satisfied. The identification code of the vehicle for which electrical power-feed has been terminated is deleted from the standby table.
As a result, while vehicles are parked in the parking spaces, it is possible to sequentially move vehicles that desire electrical power-feed to electrical power-feed parking spaces and supply electrical power.

A parking system of an embodiment of the present invention is provided with a loading and unloading station, being a space where vehicles enter or exit, wherein the moving unit can move vehicles between the loading and unloading station and one of the parking spaces among the plurality of parking spaces, or between one of the parking spaces among the plurality of parking spaces and another parking space, the control unit respectively receiving electrical power-feed reservations, being a declaration of intent to the effect that it is desired to feed electrical power to a vehicle, for every vehicle loaded into the loading and unloading station, storing additionally an identification code corresponding to a vehicle for which an electrical power-feed reservation has been received in the standby table, extracting one of the identification codes from among the plurality of identification codes stored in the standby table, and when the electrical power-feed circuit has commenced electrical power-feed to the vehicle via the relay circuit after a vehicle corresponding to the extracted identification code has been moved from the parking space to the electrical power-feed parking space and terminated electrical power-feed once a specified condition has been satisfied, deleting the identification code of the vehicle for which electrical power-feed has been terminated from the standby table.
With the above described structure, the loading and unloading station is a space where vehicles enter or exit. The moving unit can move vehicles between the loading and unloading station and one of the parking spaces among the plurality of parking spaces, or between one of the parking spaces among the plurality of parking spaces and another parking space. Electrical power-feed reservations, being declarations of intent to the effect that it is desired to supply electrical power to a vehicle, are respectively received for each vehicle that entered the loading and unloading station. An identification code corresponding to a vehicle for which an electrical power-feed reservation has been received is stored additionally in the standby table. One of the identification codes is extracted from among the plurality of identification codes stored in the standby table. After a vehicle corresponding to an extracted identification code has been moved from the parking space to the electrical power-feed parking space, the electrical power-feed circuit commences electrical power-feed to the vehicle via the relay circuit, and terminates electrical power-feed when a specified condition is satisfied. The identification code of the vehicle for which electrical power-feed has been terminated is deleted from the standby table.
As a result, while vehicles are parked in the parking spaces, it is possible to sequentially move vehicles that desire electrical power-feed to electrical power-feed parking spaces, and supply electrical power.

In the parking system of the embodiment of the present invention, the control unit causes announcement of exiting times of vehicles for which electrical power-feed reservations have been received and correlates the identification codes and the announced exiting times and stores them in the standby table, extracts, from among the plurality of identification codes stored in the standby table, an identification code for an approaching exiting time so as to give it priority, and when the electrical power-feed circuit has commenced electrical power-feed to the vehicle via a relay circuit after a vehicle corresponding to the extracted identification code has been moved from the parking space to the electrical power-feed parking space, and terminated electrical power-feed once a specified condition has been satisfied, deletes the identification code corresponding to the vehicle for which electrical power-feed has been terminated from the standby table.
With the structure of the above-described embodiment, exiting times of vehicles for which electrical power-feed reservation have been received are announced, and the identification codes and the announced exiting times are correlated and stored in the data table. An identification code having an approaching exiting time is extracted from among the plurality of identification codes that have been stored in the standby table so as to be given priority. After a vehicle corresponding to the extracted identification code has been moved from the parking space to the electrical power-feed parking space, the electrical power-feed circuit commences electrical power-feed to the vehicle via the relay circuit, and terminates electrical power-feed when a specified condition is satisfied. The identification code corresponding to the vehicle for which electrical power-feed has been terminated is deleted from the standby table.
As a result, while vehicles are parked in the parking spaces, it is possible to sequentially move vehicles that desire electrical power-feed to electrical power-feed parking spaces in accordance with exiting times, and supply electrical power.

A parking system of an embodiment of the present invention is provided with a relay circuit fixture for respectively anchoring a part of the plurality of relay circuits, and the moving unit is capable of moving a relay circuit fixture and a vehicle from one of the plurality of parking spaces to another parking space in an integrated fashion.
With the structure of the above-described embodiment, the plurality of relay circuit fixtures respectively anchor a part of the plurality of relay circuits. The moving unit can move a relay circuit fixture and a vehicle from one of the plurality of parking spaces to another parking space in an integrated fashion. As a result, while vehicles are parked in the parking spaces, it is possible to sequentially move vehicles that desire electrical power-feed to electrical power-feed parking spaces and supply electrical power.

In order to achieve the above-described object, the parking system for parking vehicles of the present invention is provided with a plurality of pallets capable of respectively holding the plurality of vehicles, a plurality of parking spaces, being spaces in which it is possible to respectively place the plurality of pallets, a moving unit capable of moving the pallets between one of the parking spaces among the plurality of parking spaces and another parking space, a plurality of relay circuits respectively provided on the plurality of pallets and that can respectively relay electrical power to vehicles held on the pallets, an electrical power-feed circuit for supplying electrical power to an electrical power-feed parking space, being at least one of the parking spaces among the plurality of parking spaces, and capable of supplying electrical power via relay circuits provided on pallets that have been placed in the electrical power-feed parking spaces, and a control unit for handling a plurality of identification codes so as to be able to respectively identify the plurality of pallets and controlling the parking system, wherein the control unit respectively receives electrical power-feed reservations, which are declarations of intent to the effect that is desired to supply electrical power to a vehicle, for each vehicle, stores additionally the identification codes corresponding to the pallets holding the vehicles in the standby table, extracts one of the identification codes from among the plurality of identification codes stored in the standby table, and, after a pallet corresponding to the extracted identification code has been moved from the parking space to the electrical power-feed parking space, and the electrical power-feed circuit commences electrical power-feed to the vehicle via the relay circuits and terminates electrical power-feed once a specified condition is satisfied, deletes the identification code corresponding to the pallet for which electrical power-feed has been terminated from the standby table.

With the above-described structure it is possible for the plurality of pallets to respectively hold a plurality of vehicles. The plurality of parking spaces are spaces in which it is possible to respectively place a plurality of pallets. The moving unit can move the pallets between one parking space among the plurality of parking spaces and another of the parking spaces. The plurality of relay circuits are respectively provided on the plurality of pallets, and can respectively supply electrical power to vehicles mounted on the pallets. The electrical power-feed circuit supplies electrical power to an electrical power-feed parking space, which is at least one parking space among the plurality of parking spaces, and can supply electrical power via the relay circuit provided on a pallet placed in the electrical power-feed parking space. The control unit handles a plurality of corresponding identification codes so as to be able to respectively identify the plurality of pallets, and controls the parking system. Electrical power-feed reservations, being declarations of intent to the effect that it is desired to supply electrical power to a vehicle, are respectively received for each vehicle. An identification code corresponding to a pallet that contains a vehicle for which an electrical power-feed reservation has been received is stored additionally to the standby table. One of the identification codes is extracted from among the plurality of identification codes that have been stored in the standby table. After a pallet corresponding to the identification code has been moved from the parking space to the electrical power-feed parking space, the electrical power-feed circuit commences electrical power-feed to the vehicle via the relay circuit, and terminates electrical power-feed when a specified condition is satisfied. The identification code corresponding to the pallet for which electrical power-feed has been terminated is deleted from the standby table.
As a result, while vehicles are parked in the parking spaces, it is possible to sequentially move vehicles that desire electrical power-feed to the electrical power-feed parking spaces and supply electrical power.

A plurality of parking systems of embodiments of the present pension will be described in the following. The present invention includes any of the embodiments described below, or a combination of two or more of these embodiments.

A parking system of an embodiment of the present invention is provided with a loading and unloading station, being a space for loading vehicles onto the pallets or unloading vehicles off the pallets, wherein the moving unit can move the pallets between the loading and unloading station and one of the parking spaces among the plurality of parking spaces, or between one of the parking spaces among the plurality of parking spaces and another parking space, the control unit respectively receiving electrical power-feed reservations, being a declaration of intent to the effect that it is desired to feed electrical power to a vehicle, for every vehicle loaded into the loading and unloading station, storing additionally an identification code, assigned to a pallet onto which a vehicle for which an electrical power-feed reservation has been received has been loaded, in the standby table, extracting one of the identification codes from among the plurality of identification codes stored in the standby table, and, when the electrical power-feed circuit has commenced electrical power-feed to the vehicle via a relay circuit after the pallet corresponding to the extracted identification code has been moved from the parking space to the electrical power-feed parking space and terminated electrical power-feed once a specified condition has been satisfied, deleting the identification code corresponding to the pallet for which electrical power-feed has been terminated from the standby table.
With the above-described structure, the loading and unloading station is a space for loading or unloading vehicles on or off the pallets. The moving unit can move the pallets between the loading and unloading station and one of the parking spaces among the plurality of parking spaces, or between one of the parking spaces among the plurality of parking spaces and another of the parking space. Electrical power-feed reservations, being declarations of intent to the effect that it is desired to supply electrical power to a vehicle, are respectively received for each vehicle that entered the loading and unloading station. An identification code assigned to a pallet that contains a vehicle for which an electrical power-feed reservation has been received is stored in the standby table. One of the identification codes is extracted from among the plurality of identification codes that have been stored in the standby table. After a pallet corresponding to the extracted identification code has been moved from the parking space to the electrical power-feed parking space, the electrical power-feed circuit commences electrical power-feed to the vehicle via the relay circuit, and terminates electrical power-feed when a specified condition is satisfied. The identification code corresponding to the pallet for which electrical power-feed has been terminated is deleted from the standby table.
As a result, while vehicles are parked in the parking spaces, it is possible to sequentially move vehicles that desire electrical power-feed to electrical power-feed parking spaces and supply electrical power.

In the parking system of the embodiment of the present invention, exiting times of vehicles for which electrical power-feed reservations have been received are announced, and the control unit correlates the identification codes and the announced exiting times and stores them in the standby table, extracts, from among the plurality of identification codes stored in the standby table, an identification code for an approaching exiting time so as to give it priority, and when the electrical power-feed circuit has commenced electrical power-feed to the vehicle via a relay circuit after a pallet corresponding to the extracted identification code has been moved from the parking space to the electrical power-feed parking space, and terminated electrical power-feed once a specified condition has been satisfied, deletes the identification code corresponding to the pallet for which electrical power-feed has been terminated from the standby table.
With the structure of the above-described embodiment, exiting times of vehicles for which electrical power-feed reservation have been received are announced, and the identification codes and the announced exiting times are correlated and stored in the standby table.
An identification code having an approaching exiting time is extracted from among the plurality of identification codes that have been stored in the standby table so as to be given priority. After a pallet corresponding to the extracted identification code has been moved from the parking space to the electrical power-feed parking space, the electrical power-feed circuit commences electrical power-feed to the vehicle via the relay circuit, and terminates electrical power-feed when a specified condition is satisfied. The identification code corresponding to the pallet for which electrical power-feed has been terminated is deleted from the standby table.
As a result, while vehicles are parked in the parking spaces, it is possible to sequentially move vehicles that desire electrical power-feed to electrical power-feed parking spaces and supply electrical power.

### Effect of the Invention

As has been described above, the parking system for parking vehicles of the present invention achieves the following effects with the above-described structure.
A plurality of vehicles are placed in a plurality of parking spaces, vehicles for which an electrical power-feed reservation has been received are moved to the electrical power-feed parking spaces, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, a plurality of identification codes corresponding to vehicles for which the electrical power-feed reservations have been received are stored in the standby table, a plurality of vehicles are placed in the plurality of parking spaces, vehicles for which an electrical power-feed reservation has been received are moved from the parking spaces to the electrical power-feed parking spaces based on the identification codes stored in the standby table, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, vehicles enter or exit at the loading and unloading station, electrical power-feed reservations for vehicles that have entered the loading and unloading station are received, identification codes corresponding to vehicles for which an electrical power-feed reservation has been received are stored in the standby table, the plurality of vehicles are placed in the plurality of parking spaces, vehicles for which an electrical power-feed reservation has been received are moved from the parking spaces to the electrical power-feed parking spaces based on the identification codes stored in the standby table, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, the exiting times are announced, of the vehicles for which an electrical power-feed reservation has been received, one having an approaching exiting time is given priority and moved from the parking space to an electrical power-feed parking space based on the identification codes stored in the standby table, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, a relay circuit fixture for anchoring a part of the relay circuits is used, and the moving unit is made capable of moving a relay circuit fixture and a vehicle in an integrated fashion, which means that while vehicles are parked in the parking spaces it is possible to sequentially move a plurality of vehicles that desire electrical power-feed to the electrical power-feed parking spaces.
Also, a plurality of identification codes corresponding to pallets on which vehicles for which the electrical power-feed reservations have been received are mounted are stored in the standby table, a plurality of vehicles are placed in the plurality of parking spaces, vehicles for which an electrical power-feed reservation has been received are moved from the parking spaces to the electrical power-feed parking spaces based on the identification codes stored in the standby table, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, vehicles enter or exit the loading and unloading station, electrical power-feed reservations for vehicles that have entered the loading and unloading station are received, identification codes corresponding to pallets on which vehicles for whitch the electrical power-feed reservation has been received have been mounted are stored in the standby table, the plurality of vehicles are placed in the plurality of parking spaces, vehicles for which an electrical power-feed reservation has been received are moved from the parking spaces to the electrical power-feed parking spaces based on the identification codes stored in the standby table, and the electrical power-feed circuit supplies electrical power to vehicles via the relay circuits, and terminates electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Also, the exiting times are announced, of the vehicles for which an electrical power-feed reservation has been received, one having an approaching exiting time is given priority based on the identification codes stored in the standby table and moved from the parking spaces to the electrical power-feed parking spaces based on the identification codes stored in the standby table, and the electrical power-feed circuit supplies electrical power to vehicles via the relay circuits, terminating electrical power-feed once a specified condition has been satisfied, which means that while vehicles are parked in the parking spaces, a plurality of vehicles for which electrical power-feed is desired can be sequentially moved to the electrical power-feed parking spaces and supplied with electrical power.
Accordingly, it is possible to provide a parking system suitable for supplying electrical power to vehicles, with a simple structure.

### BRIEF DESCRIPTION OF THE DRAWINGS

Fig. 1 is a front elevation of a parking system of a first embodiment of the present invention.
Fig. 2 is an A-A cross sectional view of the parking system of the first embodiment of the present invention.
Fig. 3 is a partial detailed view of the parking system of the first embodiment of the present invention.
Fig. 4 is a functional block diagram of the parking system of the first embodiment of the present invention.
Fig. 5 is a plan view of a parking system of a second embodiment of the present invention.
Fig. 6 is a plan view of a parking system of a third embodiment of the present invention.
Fig. 7 shows schematic views of parking systems of a plurality of the embodiments of the present invention.
Fig. 8 is a partial detailed view of the parking systems of the first to fourth embodiments of the present invention.
Fig. 9 is a partial detailed view of a parking system of a fifth embodiment of the present invention.

### BEST MODE OF EMBODYING THE INVENTION

In the following, preferred modes for embodying the present invention will be described with reference to the drawings. In each of the drawings, the same reference numerals are used for parts that are common, and repeated description will be omitted.
In the following, for convenience of description, description is given with the left hand side being made the left side, and the right hand side being made the right side, as if pairs of upper and lower moving spaces, which will be described later, are arranged laterally.

Initially, a parking system of a first embodiment of the present invention will be described based on the drawings.

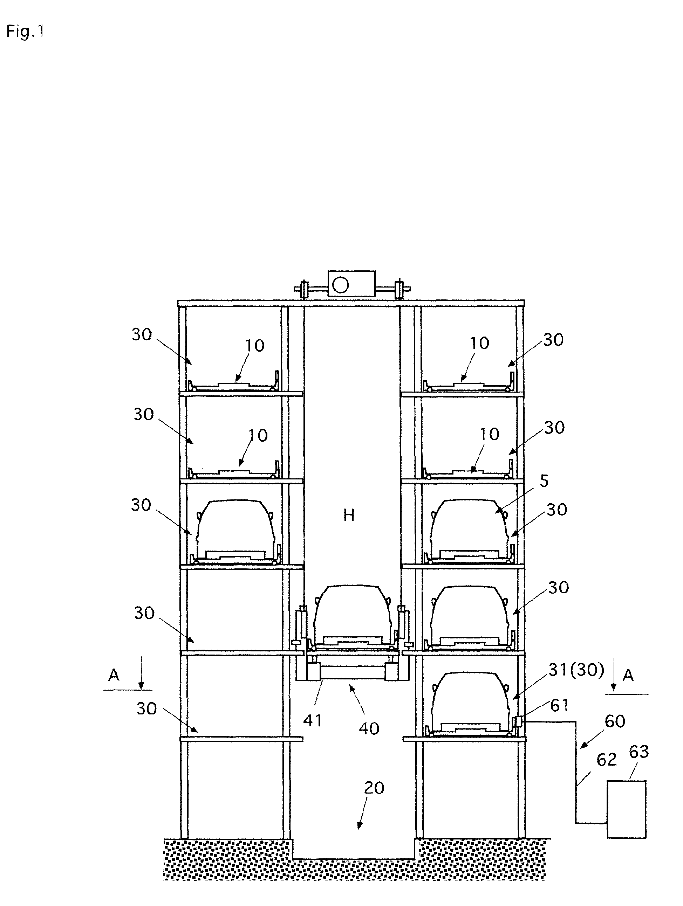

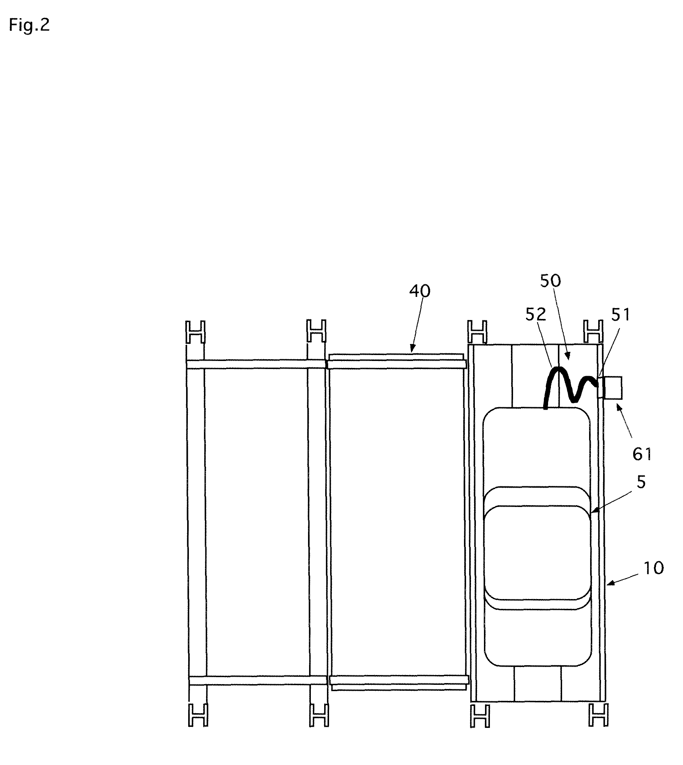

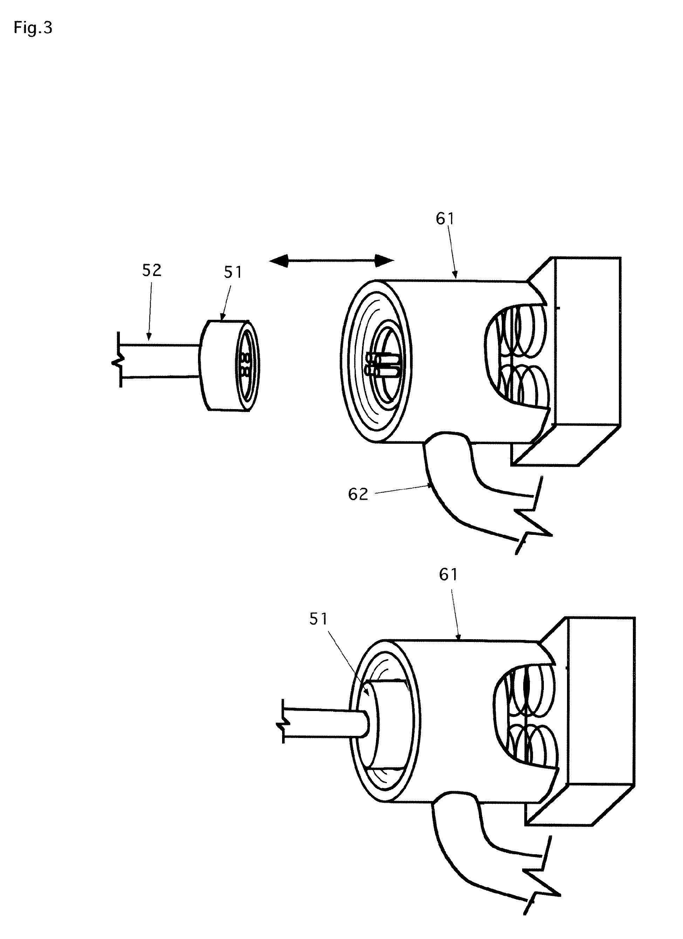

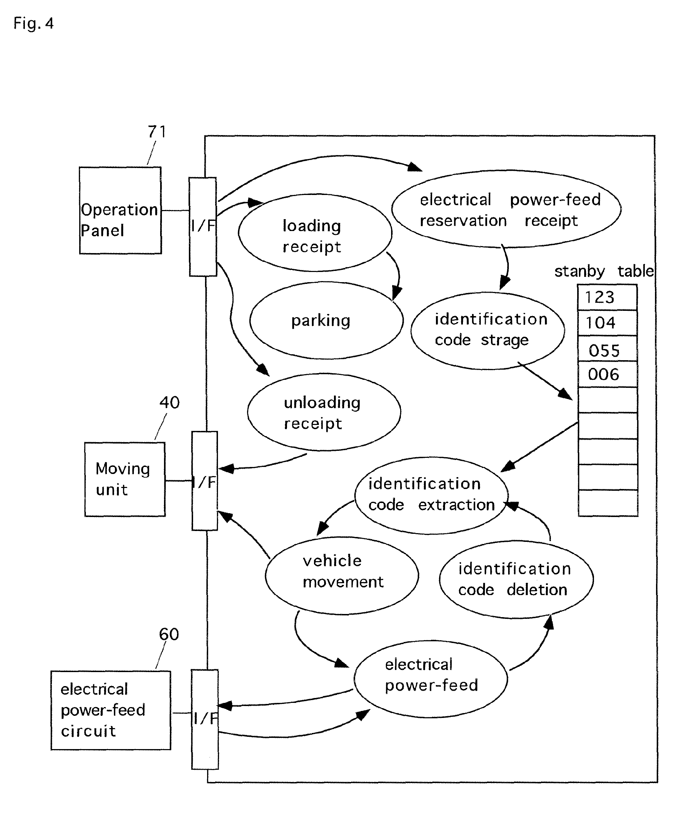

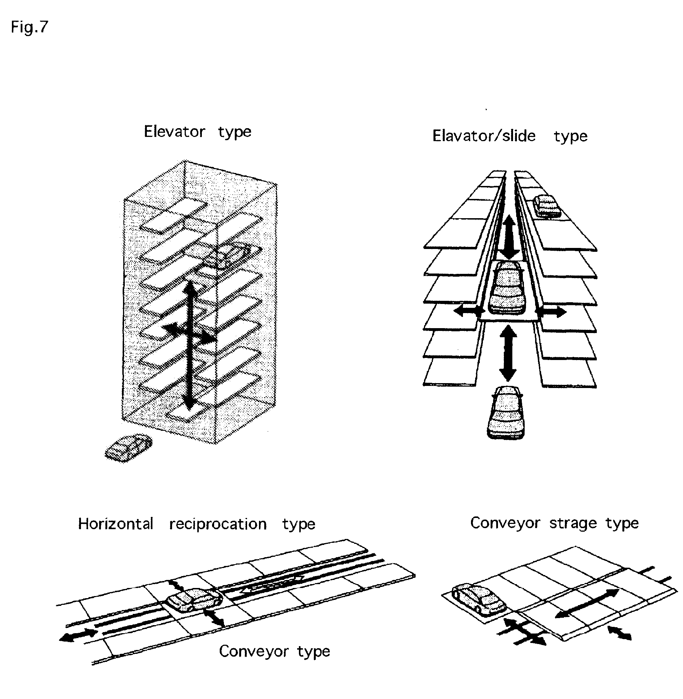

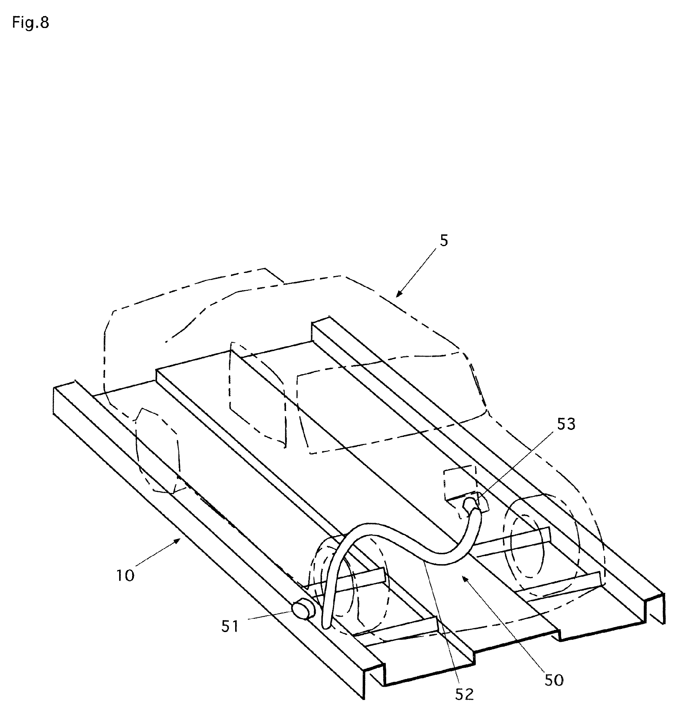

Fig. 1 is a front elevation of a parking system of an embodiment of the present invention. Fig. 2 is an A-A cross sectional view of the parking system of the embodiment of the present invention. Fig. 3 is a partial detailed view of a parking system of the embodiment of the present invention. Fig. 4 is a functional block diagram of the parking system of the embodiment of the present invention. Fig. 7 is a schematic view of the parking system of the embodiment of the present invention. Fig. 8 is a partial detailed view of the parking system of the first embodiment of the present invention.

The parking system is a system for parking vehicles 5.
Figure 7 shows parking systems of various methods, such as an elevator method, an elevator/slide method, a horizontal reciprocation method, and a conveyor storage method.
The parking system of the first embodiment applies this application to an elevator method parking system that uses pallets.
For convenience of description, particularly if not stated otherwise, description is given with left and right directions of parked vehicles made the left and right directions of the parking system.

The parking system comprises a plurality of parking spaces 30, a moving unit 40, a plurality of relay circuits 50, an electrical power-feed circuit 60, and a control unit 70.
The parking system may also comprise a plurality of pallets 10, a plurality of parking spaces 30, a moving unit 40, a plurality of relay circuits 50, an electrical power-feed circuit 60, and a control unit 70.
The parking system may also comprise a loading and unloading station 20, a plurality of parking spaces 30, a moving unit 40, a plurality of relay circuits 50, an electrical power-feed circuit 60, and a control unit 70.
The parking system may also comprise a plurality of pallets 10, a loading and unloading station 20, a plurality of parking spaces 30, a moving unit 40, a plurality of relay circuits 50, and an electrical power-feed circuit 60.

The pallets 10 are members on which it is possible to mount a vehicle 5.
For example, pallets are structural members having a rectangular outline when viewed from above.
The pallets can also have indented channels for guiding vehicle wheels parallel to the longer side of the rectangle of a vehicle 5.

The loading and unloading station 20 is a space where vehicles enter or exit.
If pallets 10 are used, in the loading and unloading station 20 a vehicle 5 can enter by placing it onto a pallet 10 under its own power, and can exit by taking it off the pallet 10 under its own power.
Parking spaces 30, which will be described later, can also double as the loading and unloading station 20.
In the case where a loading and unloading station 20 is not specially provided, vehicles can enter directly into the parking spaces 30, which will be described later, and can exit from the parking spaces 30.
For example, if the parking system is of the elevator type, the loading and unloading station 20 is a space positioned below a lifting space H in which the lifting device of the moving unit 40 moves up and down.

The parking spaces 30 are spaces into which it is possible to respectively place the vehicles 5.
If pallets 10 are used, the parking spaces 30 can be spaces in which it is possible to respectively place the plurality of pallets.
The parking spaces 30 are spaces aligned in the vertical direction in spaces to the left and right of the lifting space H in which a lift 41 of the moving unit 40 moves up and down.
For example, a support structure for supporting the pallets 10 is provided in the parking spaces 30.
At least one parking space 30 among the plurality of parking spaces 30 acts as an electrical power-feed parking space 31.

The moving unit 40 is a unit capable of moving a vehicle from one parking space 30, among the plurality of parking spaces 30, to another parking space 30.
If the pallets 10 are used, the moving unit 40 is a unit capable of moving a pallet 10 between one parking space 30 among the plurality of parking spaces 30 and another parking space 30.
If the loading and unloading station 20 is provided, the moving unit 40 is a unit capable of moving a vehicle 5 between the loading and unloading station 20 and one parking space 30 among the plurality of parking spaces 30, or between one parking space 30 among the plurality of parking spaces 30 and another parking space 30.
If the loading and unloading station is provided and the pallets 10 are used, the moving unit 40 is a unit capable of moving pallets 10 between the loading and unloading station 20 and one parking space 30 among the plurality of parking spaces 30, or between one parking space 30 among the plurality of parking spaces 30 and another parking space 30.
The moving unit 40 has a lifter 41 for moving up and down in the lifting space, and a transfer unit (not shown in the drawings) mounted on the lifter 41 and capable of moving pallets 10 between the lifter 41 and the parking spaces 30.

The plurality of relay circuits 50 are provided respectively corresponding to the vehicles, and can respectively relay electrical power to the vehicles.
If pallets 10 are used, the relay circuits 50 are respectively provided on the pallets 10, and can respectively feed electrical power to vehicles mounted on the pallets 10.
For example, the relay circuit 50 comprises a relay terminal 51, a relay cable 52, and a relay plug 53.
The relay terminal 51 is an electrical component that couples with an electrical power-feed terminal 61, which will be described later, and is supported on the pallet 10.
Once the relay terminal 51 and the electrical power-feed terminal 61 are engaged, they are electrically connected with each other.
If the relay terminal 51 and the electrical power-feed terminal 61 are separated, the terminals are separated from each other and electrically disconnected.
Fig. 3 shows one example of combining the relay terminal 51 and the electrical power-feed terminal 61.
A guide section is provided for guiding one of the relay terminal 51 or the electrical power-feed terminal 61 to the other.
For example, the guide section is provided on the electrical power-feed terminal 61 and has a horn shape to guide the relay terminal 51.
If a relay terminal 51 and electrical power-feed terminal 61 that are separated are brought close together, the guide section guides the relay terminal 51, the relay terminal and the 51 and the electrical power-feed terminal 61 engage, and the two terminals are electrically connected.
When the relay terminal 51 and the electrical power-feed terminal 61 engage, an elastic structure provided on one of the relay terminal 51 or the electrical power-feed terminal 61 takes up positional offset between the relay terminal 51 and the electrical power-feed terminal 61. The elastic structure is, for example, a helical spring provided on the bottom section of the electrical power-feed terminal 61.
When the pallets 10 are moved in the lateral direction and loaded into the parking spaces 30, one relay terminal 51 is supported at the left or right of a pallet.
Figure 2 shows one relay terminal 51 supported on the right of the pallet 10.
If this approach is adopted, when a pallet 10 is moved from the left to the right, and placed in a parking space 30, the relay terminal 51 and the electrical power-feed terminal 61 are engaged.
Also, two relay terminal 51 are respectively supported on the left and right of a pallet.
The relay cable 52 is an electrical cable for electrically connecting a relay terminal 51 and a relay plug 53.
The relay plug 53 is an electrical component that engages with a relay socket 6 provided on a vehicle 5 for receiving electrical power-feed.

The electrical power-feed circuit 60 is an electrical circuit for supplying electrical power to an electrical power-feed parking space 31, which is at least one of the parking spaces 30 among the plurality of parking spaces 30, and can feed electrical power to a vehicle 5 via a relay circuit 50 provided so as to correspond to a vehicle 5 that has been placed in the electrical power-feed parking space 31.
If pallets 10 are used, the electrical power-feed circuit 60 is an electrical circuit for supplying electrical power to an electrical power-feed parking space 31, which is at least one of the parking spaces 30 among the plurality of parking spaces 30, and can feed electrical power to a vehicle 5 via a relay circuit 50 provided on a pallet 10 that has been placed in the electrical power-feed parking space 31.
The electrical power-feed circuit 60 comprises an electrical power-feed terminal 61, an electrical power-feed cable 62 and an electrical power-feed box 63.
One electrical power-feed terminal 61 is supported on a structure constituting one electrical power-feed parking space 31.
It is also possible to provide a plurality of electrical power-feed parking spaces 31.
With the elevator method using pallets 10, the total number of pallets 10 may be at least one less than the total number of parking spaces 30 including the electrical power-feed parking space 31.
By adopting this approach, it is possible to place any pallet in an electrical power-feed parking space 31 at any time.
The electrical power-feed cable 62 is an electrical cable for electrically connecting the electrical power-feed terminal 61 and the electrical power-feed box 63.
The electrical power-feed box 63 is a controller for controlling a electrical power source for feeding electrical power to a vehicle 5.
The electrical power-feed box 63 is controlled by the control unit 70.

The control unit 70 is a unit for controlling the parking system.
The control unit 70 is comprised of a control panel 71 and a control box 72.
An operator operates the control panel 71.
The control box 72 houses control circuits which will describe later.
The control unit 70 may handle a plurality of corresponding identification codes so as to be able to respectively identify a plurality of vehicles 5.
The control unit 70 may handle a plurality of corresponding identification codes so as to be able to respectively identify a plurality of pallets 10.
Identification codes corresponding to the pallets 10 may be identification codes of vehicles loaded onto the pallets.
Administration codes stored in a parking ticket may be identification codes of vehicles. In this case, administration codes and pallet identification codes are stored in association.

The parking system receives electrical power-feed reservations, which are declarations of intent to the effect that it is desired to feed electrical power to a vehicle, for every vehicle, and after a vehicle 5 for which an electrical power-feed reservation has been received has been moved from a parking space 30 to an electrical power-feed parking space 31, the electrical power-feed circuit 60 commences electrical power-feed to the vehicle 5 via a relay circuit 50, and terminates electrical power-feed once a specified condition has been satisfied.
Also, with the parking system, after a vehicle 5 for which an electrical power-feed reservation has been received has been moved from the loading and unloading station 20 to an electrical power-feed parking space 31, the electrical power-feed circuit 60 commences electrical power-feed to the vehicle 5 via a relay circuit 50, and terminates electrical power-feed once a specified condition has been satisfied.
Once electrical power-feed has been terminated, the vehicle 5 is moved from the electrical power-feed parking space 31 to another parking space 30.
Alternatively, once electrical power-feed has been terminated, the vehicle 5 is moved from the electrical power-feed parking space 31 to the loading and unloading station 20.

The control unit 70 respectively receives electrical power-feed reservations, being a declaration of intent to the effect that it is desired to feed electrical power to a vehicle, for every vehicle, stores additionally identification codes corresponding to vehicles for which an electrical power-feed reservation has been received in a standby table, extracts one of the identification codes from among the plurality of identification codes stored in the standby table, and, when the electrical power-feed circuit has commenced electrical power-feed to the vehicle via a relay circuit after a vehicle corresponding to the extracted identification code has been moved from the parking space to the electrical power-feed parking space and terminated electrical power-feed once a specified condition has been satisfied, deletes the identification code of the vehicle for which electrical power-feed has been terminated from the standby table.
Also, if the loading and unloading station is provided, the control unit respectively receives electrical power-feed reservations, being a declaration of intent to the effect that it is desired to feed electrical power to a vehicle, for every vehicle entering the loading and unloading station, stores additionally identification codes corresponding to vehicles for which an electrical power-feed reservation has been received in a standby table, extracts one of the identification codes from among the plurality of identification codes stored in the standby table, and, when the electrical power-feed circuit has commenced electrical power-feed to the vehicle via a relay circuit after a vehicle corresponding to the extracted identification code has been moved from the parking space to the electrical power-feed parking space and terminated electrical power-feed once a specified condition has been satisfied, deletes the identification code of the vehicle for which electrical power-feed has been terminated from the standby table.

If pallets are used, the control unit respectively receives electrical power-feed reservations, being a declaration of intent to the effect that it is desired to feed electrical power to a vehicle, for every vehicle, stores additionally identification codes, corresponding to pallets on which vehicles for which an electrical power-feed reservation has been received have been loaded, in a standby table, extracts one of the identification codes from among the plurality of identification codes stored in the standby table, and, when the electrical power-feed circuit has commenced electrical power-feed to the vehicle via a relay circuit after a pallet corresponding to the extracted identification code has been moved from the parking space to the electrical power-feed parking space and terminated electrical power-feed once a specified condition has been satisfied, deletes the identification code corresponding to the pallet for which electrical power-feed has been terminated from the standby table.
Also, if the loading and unloading station is provided, the control unit respectively receives electrical power-feed reservations, being a declaration of intent to the effect that it is desired to feed electrical power to a vehicle, for every vehicle that has entered the loading and unloading section, stores additionally identification codes that have been assigned to pallets on which vehicles for which an electrical power-feed reservation has been received have been loaded in a standby table, extracts one of the identification codes from among the plurality of identification codes stored in the standby table, and, when the electrical power-feed circuit has commenced electrical power-feed to the vehicle via a relay circuit after a pallet corresponding to the extracted identification code has been moved from the parking space to the electrical power-feed parking space and terminated electrical power-feed once a specified condition has been satisfied, deletes the identification code corresponding to the pallet for which electrical power-feed has been terminated from the standby table.

Fig. 4 is a functional block diagram of the parking system of the embodiment of the present invention.
The control circuit is comprised of a CPU, the storage unit, and interface, and other components.
The interface is connected to the operation panel 71, the moving unit 40, the electrical power-feed circuit 60, and other components.
A program installed in the control circuit realizes a loading receipt function, a parking function, an unloading receipt function, an electrical power-feed reservation receipt function, an identification code storage function, an identification code extraction function, a vehicle moving function, an electrical power-feed function, an identification code deletion function, and other functions, in the control unit.
In the following, an example where pallets 10 are used and the loading and unloading station is provided will be described.

### (Loading receipt function)

A declaration of intent to the effect that is desired to park a vehicle is received, and the vehicle 5 taken in to the loading and unloading station 20.
In the event that there is no empty pallet 10 at the loading and unloading station 20, an empty pallet 10 is moved by the moving unit 40 from any parking space 30 to the loading and unloading station.
A loading gate is opened, and the vehicle is loaded under its own power onto the pallet 10.

### (Parking function)

Using the moving unit 40, the vehicle 5 is moved from the loading and unloading station 20 to a parking space 30.
If pallets are used, a pallet 10 on which the vehicle 5 is loaded is moved from the loading and unloading station 20 to a parking space 30 using the moving unit 40.

### (Unloading receipt function)

A declaration of intent to the effect that it is desired to unload a vehicle is received.
Using the moving unit 40, a pallet 10 on which a vehicle that requires unloading is loaded is moved from the parking space 30 to the loading and unloading station 20.
An unloading gate is opened, and the vehicle is taken off the pallet 10 under its own power.

### (Electrical power-feed reservation receipt function)

Electrical power-feed reservations, being declarations of intent to the effect that it is desired to supply electrical power to a vehicle, are respectively received.
Electrical power-feed reservations, being declarations of intent to the effect that it is desired to supply electrical power to a vehicle, for every vehicle that entered the loading and unloading station, may be received.
Electrical power-feed reservations that are declarations of intent to the effect that it is desired to supply electrical power, for a vehicle that is already parked, may be received.

### (Identification code storage function)

Identification codes corresponding to vehicles for which an electrical power-feed reservation has been received are stored additionally in the standby table.
For example, an administration code stored in a parking ticket for a vehicle for which an electrical power-feed reservation has been received is stored additionally in the standby table as a vehicle identification code.
If pallets 10 are used, identification codes corresponding to pallets 10 on which vehicles for which an electrical power-feed reservation has been received have been loaded are stored additionally in the standby table. In this case, identification codes corresponding to pallets on which vehicles have been loaded correspond to identification codes corresponding to vehicles.
For example, pallet numbers previously assigned to pallets 10 on which vehicles for which an electrical power-feed reservation has been received have been loaded may be stored additionally in the standby table as identification codes
For example, pallet numbers previously assigned to pallets 10 on which vehicles for which an electrical power-feed reservation has been received have been loaded may be stored additionally in the standby table as identification codes of vehicles.

### (Identification code extraction function)

One identification code is extracted from among the plurality of identification codes that have been stored in the standby table.
For example, one identification code is extracted from among the plurality of identification codes that have been stored in the standby table, in order of earliest stored.

### (Vehicle moving function)

A vehicle corresponding to the extracted identification code is moved from a parking space 30 to an electrical power-feed parking space 31.
Also, a pallet corresponding to the extracted identification code is moved from a parking space 30 to an electrical power-feed parking space 31.
Once a pallet 10 has been moved to an electrical power-feed parking space 31, a relay terminal 51 fixed to the pallet 10 and an electrical power-feed terminal 61 fixed to the electrical power-feed parking space 31 are electrically connected.
Further, using the moving unit 40, a vehicle 5 that has completed electrical power-feed is moved from the electrical power-feed parking space 31 to a parking space 30.
Still further, a pallet on which a vehicle 5 that has completed electrical power-feed is loaded is moved from the electrical power-feed parking space 31 to a parking space 30 using the moving unit 40.
Once a pallet 10 has been moved from an electrical power-feed parking space 31, a relay terminal 51 fixed to the pallet 10 and an electrical power-feed terminal 61 fixed to the electrical power-feed parking space 31 are separated and electrically disconnected.

### (Electrical power-feed function)

The electrical power-feed circuit 60 commences electrical power-feed to a vehicle via a relay circuit, and terminates electrical power-feed when a specified condition is satisfied.

### (Identification code deletion function)

The identification code corresponding to the pallet 10 for which electrical power-feed has been terminated is deleted from the standby table.

The loading receipt function, the parking function, and the unloading receipt function are sequentially repeated.
The electrical power-feed reservation receipt function, the identification code storage function, the identification code extraction function, the vehicle movement function, the electrical power-feed function, and the identification code deletion function are sequentially repeated.
By realizing the above-described functions, it is possible to park a plurality of vehicles for which electrical power-feed is required in an electrical power-feed parking space 31 in order, and supply electrical power.

Next, a parking system of a second embodiment of the present invention will be described based on the drawings.

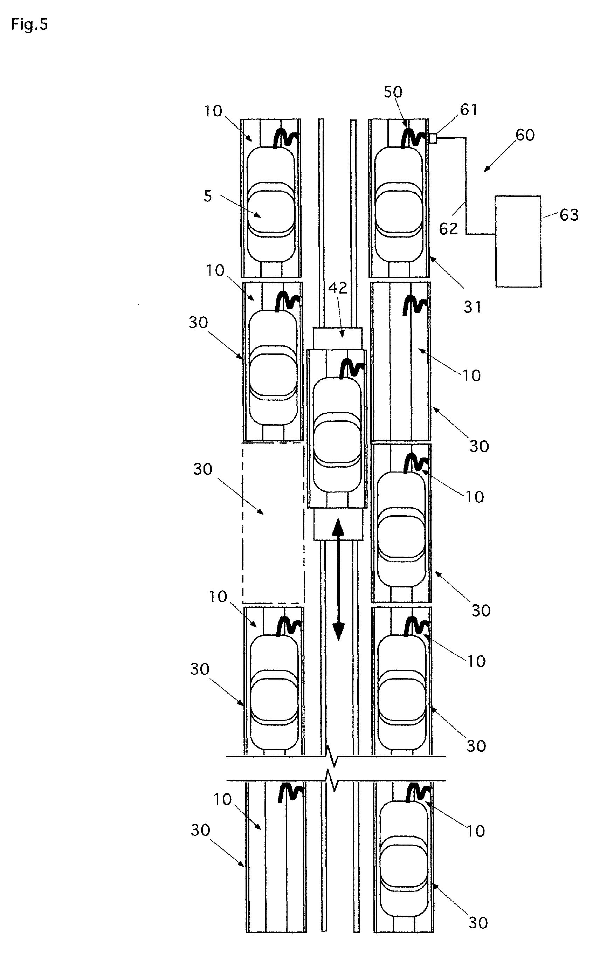

Fig. 5 is a plan view of a parking system of the second embodiment.
Description will be omitted for points that are the same as the parking system of the first embodiment, and only points of difference will be described.
The parking system of the second embodiment is an embodiment that applies the invention of this application to a conventional elevator/ slide method and a horizontally reciprocating method.

The parking system is a system for parking vehicles 5.
In the following, for convenience of explanation, a case where the parking system is of the horizontal reciprocating type using pallets will be described as an example.
Also, for convenience of description, particularly unless otherwise stated, description is given with left and right directions of parked vehicles made the left and right directions of the parking system.

The parking system comprises a plurality of parking spaces 30, a moving unit 40, a plurality of relay circuits 50, an electrical power-feed circuit 60, and a control unit 70.
The parking system may also comprise a plurality of pallets 10, a moving unit 40, a plurality of relay circuits 50, an electrical power-feed circuit 60, and a control unit 70.
The parking system may also comprise a loading and unloading station 20, a plurality of parking spaces 30, a moving unit 40, a plurality of relay circuits 50, an electrical power-feed circuit 60, and a control unit 70.
The parking system may also comprise a plurality of pallets 10, a loading and unloading station 20, a plurality of parking spaces 30, a moving unit 40, a plurality of relay circuits 50, and an electrical power-feed circuit 60.
The pallets 10, loading and unloading station 20, the plurality of relay circuits 50 and the electrical power-feed circuit 60 are the same as in the first embodiment, and so description will be omitted.

The parking spaces 30 are spaces into which it is possible to respectively place the vehicles 5 one vehicle at a time.
If pallets 10 are used, the parking spaces 30 can be spaces in which it is possible to respectively place the plurality of pallets.
The parking spaces 30 are spaces lined up along a traveling passage in spaces to the left and right of the traveling passage in which a horizontal travel unit 42 of the moving unit 40, which will be described later, travels.
For example, a support structure for supporting the pallets 10 is provided in the parking spaces 30.
At least one parking space among the plurality of parking spaces 30 acts as an electrical power-feed parking space 31.

The moving unit 40 is a unit capable of moving a vehicle from one parking space 30, among the plurality of parking spaces 30, to another parking space 30.
If the pallets 10 are used, the moving unit 40 is a unit capable of moving a pallet 10 between one parking space 30 among the plurality of parking spaces 30 and another parking space 30.
If the loading and unloading station 20 is provided, the moving unit 40 is a unit capable of moving a vehicle 5 between the loading and unloading station 20 and one parking space 30 among the plurality of parking spaces 30, or between one parking space 30 among the plurality of parking spaces 30 and another parking space 30.
If the loading and unloading station is provided and the pallets 10 are used, the moving unit 40 is a unit capable of moving pallets 10 between the loading and unloading station 20 and one parking space 30 among the plurality of parking spaces 30, or between one parking space 30 among the plurality of parking spaces 30 and another parking space 30.
The moving unit 40 has a lifter (not shown) for going up and down in the lifting space, a horizontal travel unit 42, and a transfer unit (not shown) capable of moving pallets 10 between the horizontal travel unit and the parking spaces 30.

Next, a parking system of a third embodiment of the present invention will be described based on the drawings.

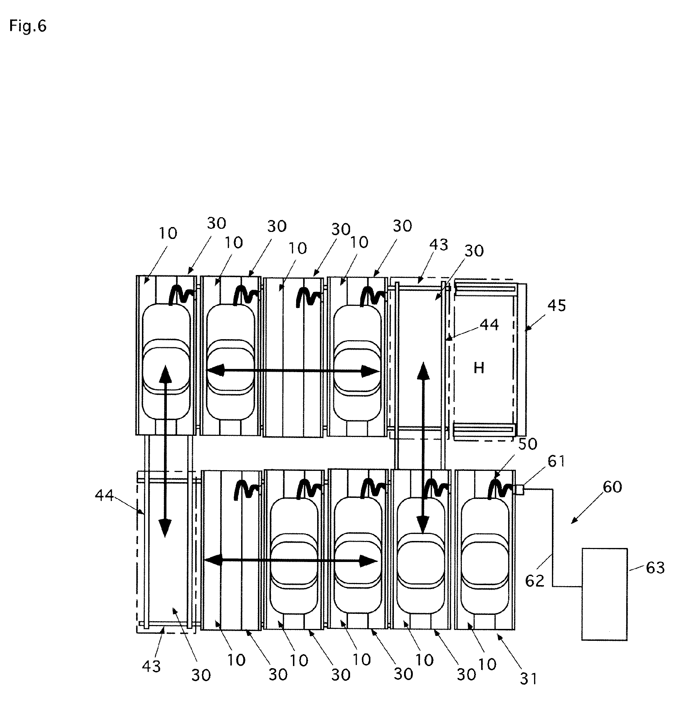

Fig. 6 is a plan view of a parking system of the third embodiment.
Description will be omitted for points that are the same as the parking system of the first embodiment, and only points of difference will be described.
The parking system of the third embodiment is an embodiment that applies the invention of this application to a conventional conveyance and storage method.

The parking system is a system for parking vehicles 5.
In the following, for convenience of explanation, a case where the parking system is of the conveyance and storage type using pallets will be described as an example.
Also, for convenience of description, particularly unless otherwise stated, description is given with left and right directions of parked vehicles made the left and right directions of the parking system.

The parking system comprises a plurality of parking spaces 30, a moving unit 40, a plurality of relay circuits 50, an electrical power-feed circuit 60, and a control unit 70.
The parking system may also comprise a plurality of pallets 10, a moving unit 40, a plurality of relay circuits 50, an electrical power-feed circuit 60, and a control unit 70.
The parking system may also comprise a loading and unloading station 20, a plurality of parking spaces 30, a moving unit 40, a plurality of relay circuits 50, an electrical power-feed circuit 60, and a control unit 70.
The parking system may also comprise a plurality of pallets 10, a loading and unloading station 20, a plurality of parking spaces 30, a moving unit 40, a plurality of relay circuits 50, and an electrical power-feed circuit 60.
The pallets 10, loading and unloading station 20, the plurality of relay circuits 50 and the electrical power-feed circuit 60 are the same as in the first embodiment, and so description will be omitted.

The parking spaces 30 are spaces into which it is possible to respectively place the vehicles 5.
If pallets 10 are used, the parking spaces 30 may be spaces in which it is possible to respectively place the plurality of pallets.
The parking spaces 30 are spaces positioned in rectangles on a horizontal surface along a transverse feed rail 43 and a vertical feed rail 44 (which will be described later) of the moving unit.
At least one parking space 30 among the plurality of parking spaces 30 acts as an electrical power-feed parking space 31.
Fig. 6 shows positioning of an electrical power-feed parking space 31 at the side of a lifting space H within which a lifter moves up and down.
Except for a pallet 10 that is in the electrical power-feed parking space 31, the plurality of pallets 10 circulate on the horizontal surface by sequential transverse feed and vertical feed. Vehicles are moved between a loading and unloading space (not shown) positioned above the lifting space H and parking spaces 30 using the lifter 45.
Also, using a transverse feed unit, a vehicle is moved from a parking space 30 to an electrical power-feed parking space 31.

The moving unit 40 is a unit capable of moving a vehicle from one parking space 30, among the plurality of parking spaces 30, to another parking space 30. If the pallets 10 are used, the moving unit 40 is a unit capable of moving a pallet 10 between one parking space 30 among the plurality of parking spaces 30 and another parking space 30. if the loading and unloading station 20 is provided, the moving unit 40 is a unit capable of moving a vehicle 5 between the loading and unloading station 20 and one parking space 30 among the plurality of parking spaces 30, or between one parking space 30 among the plurality of parking spaces 30 and another parking space 30.
If the loading and unloading station is provided and the pallets 10 are used, the moving unit 40 is a unit capable of moving pallets 10 between the loading and unloading station 20 and one parking space 30 among the plurality of parking spaces 30, or between one parking space 30 among the plurality of parking spaces 30 and another parking space 30.
The moving unit 40 is comprised of a pair of a transverse feed rails 43, a transverse feed unit (not shown), a pair of a vertical feed rails 44, a vertical feed unit (not shown), and a lifter 45 for moving up and down in the lifting space H.
The transverse feed unit is a unit for transverse feeding the plurality of pallets 10 along the pair of transverse feed rails 43.
The vertically feed unit is a unit for vertically feeding a pair of pallets 10 along the pair of vertical feed rails 44.
The lifter 45 is a unit for moving up and down in the lifting space H with transverse fed pallets 10 on board, and moving vehicles between the loading and unloading station 20 and the parking spaces 30.

Next, a parking system of a fourth embodiment of the present invention will be described based on the drawings.
Description will be omitted for points that are the same as the parking system of the first embodiment, and only points of difference will be described.

The parking system is a system for parking vehicles 5.
In the following, for convenience of description, a case of a parking system of the elevator type using pallets 10 will be described as an example.
Also, for convenience of description, particularly if unless otherwise stated, description is given with left and right directions of parked vehicles made the left and right directions of the parking system.

The parking system comprises a plurality of parking spaces 30, a moving unit 40, a plurality of relay circuits 50, an electrical power-feed circuit 60, and a control unit 70.
The parking system may also comprise a plurality of pallets 10, a moving unit 40, a plurality of relay circuits 50, an electrical power-feed circuit 60, and a control unit 70.
The parking system may also comprise a loading and unloading station 20, a plurality of parking spaces 30, a moving unit 40, a plurality of relay circuits 50, an electrical power-feed circuit 60, and a control unit 70.
The parking system may also comprise a plurality of pallets 10, a loading and unloading station 20, a plurality of parking spaces 30, a moving unit 40, a plurality of relay circuits 50, and an electrical power-feed circuit 60.

Except for the control unit, the remaining structure is the same as for the first embodiment.
The control unit respectively receives electrical power-feed reservations, being a declaration of intent to the effect that it is desired to feed electrical power to a vehicle, for every vehicle, stores additionally identification codes corresponding to vehicles for which an electrical power-feed reservation has been received in a standby table, and extracts one of the identification codes from among the plurality of identification codes stored in the standby table.
Further, exiting times for vehicles for which an electrical power-feed reservation has been received are announced, and identification codes and announced exiting times are correlated and stored in the standby table, an identification code having an approaching exiting time is extracted so as to give priority from among the plurality of identification codes stored in the standby table, and, when the electrical power-feed circuit has commenced electrical power-feed to the vehicle via a relay circuit after a vehicle corresponding to the extracted identification code has been moved to the electrical power-feed parking space, and terminated electrical power-feed once a specified condition has been satisfied, the identification code of the vehicle for which electrical power-feed has been terminated is deleted from the standby table.
Further, if pallets are used, exiting times for vehicles for which an electrical power-feed reservation has been received are announced, and identification codes and announced exiting times are correlated and stored in the standby table, an identification code of an approaching exiting time is extracted so as to give priority from among the plurality of identification codes stored in the standby table, and, when the electrical power-feed circuit has commenced electrical power-feed to the vehicle via a relay circuit after a pallet corresponding to the extracted identification code has been moved to the electrical power-feed parking space, and terminated electrical power-feed once a specified condition has been satisfied, the identification code of the pallet for which electrical power-feed has been terminated is deleted from the standby table.

A program installed in the control circuit realizes a loading receipt function, a parking function, an unloading receipt function, an electrical power-feed reservation receipt function, an identification code storage function, an exiting time receipt function, an identification code storage function, an identification code extraction function, a vehicle moving function, an electrical power-feed function, an identification code deletion function, and other functions, in the control unit.

The loading receipt function, parking function, unloading receipt function, vehicle moving function, electrical power-feed reservation receipt function, electrical power-feed start function, electrical power-feed termination function, identification code deletion function, and other functions, are the same as for the parking system of the first embodiment.

### (Exiting time receipt function)

Exiting times of vehicles for which electrical power-feed reservation have been received are announced, and the identification codes and the announced exiting times are correlated and stored in the standby table.

### (Identification code extraction function)

One identification code is extracted from among the plurality of identification codes that have been stored in the standby table.
Further, an identification code having an approaching exiting time is extracted from among the plurality of identification codes that have been stored in the standby table so as to be given priority.
For example, normally one identification code is extracted from among the plurality of identification codes that have been stored in the standby table, in order of earliest stored, and if there is an approaching exiting time from among the plurality of identification codes an identification code is extracted so as to give the approaching exiting time priority.
For example, times required for charging are predefined as electrical power-feed requirement times, an electrical power-feed commencement time that is prior, by the electrical power-feed requirement time, to the exiting time is calculated, and if the electrical power-feed commencement time approaches the current time an identification code that stored the exiting time is extracted.

If the above functions are demonstrated, it is normally possible to park a plurality of vehicles that require electrical power-feed in an electrical power-feed parking space 31 in order, and in the case of a vehicle with an approaching exiting time, the vehicle with the approaching exiting time is given priority and can be supplied with electrical power.

Next, a parking system of a fifth embodiment of the present invention will be described based on the drawings.

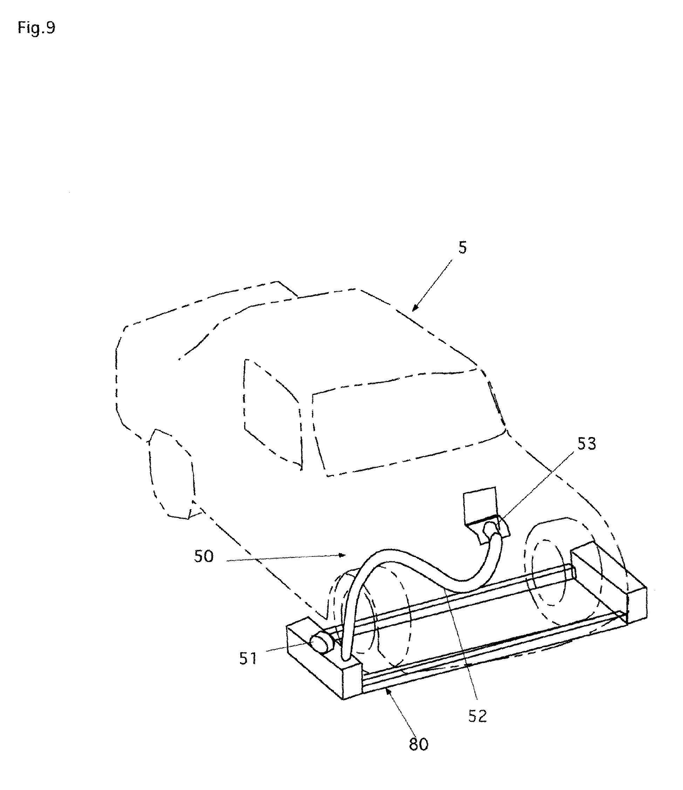

Fig. 9 is a partial detailed view of a parking system of the fifth embodiment.
Description will be omitted for points that are the same as the parking system of the first embodiment, and only points of difference will be described.

The parking system is a system for parking vehicles 5.
In the following, for convenience of description, a case of a parking system of the elevator type that does not use pallets 10 will be described as an example.
Also, for convenience of description, particularly unless otherwise stated, description is given with left and right directions of parked vehicles made the left and right directions of the parking system.

The parking system comprises a plurality of parking spaces 30, a moving unit 40, a plurality of relay circuits 50, an electrical power-feed circuit 60, and a control unit 70.
The parking system may also comprise a plurality of parking spaces 30, a moving unit 40, a plurality of relay circuits 50, an electrical power-feed circuit 60, a control unit 70, and a plurality of relay circuit fixtures 80.
The parking system may also comprise a loading and unloading station 20, a plurality of parking spaces 30, a moving unit 40, a plurality of relay circuits 50, an electrical power-feed circuit 60, a control unit 70, and a plurality of relay circuit fixtures 80.

The structure of the plurality of parking spaces 30, the plurality of relay circuits 50, the electrical power-feed circuit 60 and the control unit 70 are the same as those of the parking system of the first embodiment, and so description will be omitted.

The relay circuit fixtures 80 are units for respectively fixing a part of the relay circuits.
For example, a relay terminal 51 of relay circuit 50 and one end of a relay cable are fixed to a relay circuit fixture 80.
The relay circuit fixtures 80 may also be detachable from the vehicle 5.
For example, a relay circuit fixture 80 may also be attached to and detached from wheels of the vehicle 5.
The relay circuit fixtures 80 may be capable of being positioned with respect to the vehicle 5.
For example, a relay circuit fixture 80 can also have a structure doubling as a linchpin of a wheel of the vehicle 5.
Fig. 9 shows one example of a relay circuit fixture 80.

The moving unit 40 is a unit capable of moving a relay circuit fixture 80 and a vehicle 5 from one parking space 30, among the plurality of parking spaces 30, to another parking space 30 in an integrated manner.
If the loading and unloading station 20 is provided, the moving unit 40 is a unit capable of moving a relay circuit fixtures 80 and a vehicle 5 between the loading and unloading station 20 and one parking space 30 among the plurality of parking spaces 30, or between one parking space 30 among the plurality of parking spaces 30 and another parking space 30, in an integrated manner.
In the case of the elevator method, the moving unit 40 has a lifter 41 for moving up and down in the lifting space, and a moving unit (not shown in the drawings) mounted on the lifter 41 and capable of moving pallets 10 between the lifter 41 and the parking spaces 30.
For example, the moving unit 40 can support a relay circuit fixture 80 and a vehicle 5 in an integrated manner using a comb-shaped structure, and move them between the loading and unloading station 20 or a parking space 30 and another parking space 30. Parking spaces 30 can support a relay circuit fixture 80 and a vehicle 5 in an integrated manner using a comb-shaped structure, and park a vehicle 5.
For example, the moving unit 40 can support a relay circuit fixture 80 and a vehicle 5 in an integrated manner using a belt conveyor shaped structure, and move them between the loading and unloading station 20 or a parking space 30 and another parking space 30. Parking spaces 30 can support a relay circuit fixture 80 and a vehicle 5 in an integrated manner using a belt conveyor structure, and park a vehicle 5.

With the above-described structure, even for a parking system that does not use pallets, it is possible to sequentially feed electrical power to vehicles for which electrical power-feed is required.

If parking systems of the above described embodiments are used, the following effects are demonstrated.
By putting a plurality of vehicles 5 into a plurality of parking spaces 30 and moving vehicles 5 for which an electrical power-feed reservation has been received to an electrical power-feed parking space 31, causing the electrical power-feed circuit 60 to feed electrical power to the vehicles 5 via the relay circuits 50, and terminate electrical power-feed once a predetermined condition has been reached, while vehicles 5 are parked in the parking spaces 30, a plurality of vehicles 5 that desire electrical power-feed are sequentially moved to the electrical power-feed parking space 31 and supplied with electrical power, and the vehicles 5 are returned to the parking spaces 30 upon termination of electrical power-feed, and this cycle repeated, enabling sequential electrical power-feed for a plurality of vehicles 5.
Also, by repeating operations of storing identification codes corresponding to vehicles 5 for which electrical power-feed reservations have been received, in a standby table, putting a plurality of vehicles 5 in a plurality of parking spaces 30, moving vehicles 5 for which electrical power-feed reservations have been received to an electrical power-feed parking space 31 based on identification codes stored in the standby table, having the electrical power-feed circuit 60 supply electrical power via the relay circuits 50, completing electrical power-feed when a specified condition is satisfied, and returning vehicles that have completed electrical power-feed to the parking spaces 30, it is possible to sequentially move a plurality of vehicles that desire electrical power-feed to the electrical power-feed parking space and supply electrical power.
Also, by repeating operations of loading or unloading vehicles 5 at the loading and unloading station 20, receiving electrical power-feed reservations for vehicles 5 that have entered the loading station 20, storing identification codes corresponding to vehicles 5 for which electrical power-feed reservations have been received in a standby table, putting a plurality of vehicles 5 in a plurality of parking spaces 30, moving vehicles 5 for which electrical power-feed reservations have been received to an electrical power-feed parking space 31 based on identification codes stored in the standby table, having the electrical power-feed circuit supply electrical power via the relay circuits, completing electrical power-feed when a specified condition is satisfied, and returning vehicles 5 that have completed electrical power-feed to the parking spaces 30, it is possible to sequentially move a plurality of vehicles 5 that desire electrical power-feed to the electrical power-feed parking space and supply electrical power.
Also, by repeating operations of announcing exiting times, giving vehicles 5 for which electrical power-feed reservations have been received that have an approaching exiting time priority based on identity codes stored in the standby table and moving those vehicles to an electrical power-feed parking space 31, having the electrical power-feed circuit supply electrical power to the vehicles via the relay circuits, terminating electrical power-feed when a specified condition is satisfied, and returning vehicles 5 for which electrical power-feed has been terminated to the parking spaces 30, while the vehicles are parked in parking spaces it is possible to sequentially move a plurality of vehicles that desire electrical power-feed to the electrical power-feed parking spaces and supply electrical power to them.
Also, since relay circuit fixtures 80 for fixing a part of the relay circuits are used so that the moving unit 40 moves the relay circuit fixtures 80 and the vehicles 5 in an integrated manner, then even if a parking system of a type that does not use pallets is used it is possible, while vehicles are parked in parking spaces, to sequentially move a plurality of vehicles that desire electrical power-feed to electrical power-feed parking spaces and supply electrical power to them.
Also, since the relay circuit fixtures 80 can be attached to and detached from the vehicles, handling of integration of vehicles and relay circuit fixtures 80 can be done easily.
Also, by repeating operations of storing identification codes, corresponding to pallets on which vehicles 5 for which electrical power-feed reservations have been received have been loaded, in a standby table, putting a plurality of vehicle in a plurality of parking spaces, moving vehicles for which electrical power-feed reservations have been received to an electrical power-feed parking space based on identification codes stored in the standby table, having the electrical power-feed circuit supply electrical power via the relay circuits, completing electrical power-feed when a specified condition is satisfied, and returning pallets 10 on which vehicles that have completed electrical power-feed are loaded to the parking spaces 30, it is possible, while vehicles 5 are parked in the parking spaces 30, to sequentially move a plurality of vehicles that desire electrical power-feed to the electrical power-feed parking space and supply electrical power.
Also, by repeating operations of loading or unloading vehicles at the loading and unloading station 20, receiving electrical power-feed reservations for vehicles that have been loaded at the loading station 20, storing identification codes corresponding to pallets 10 on which vehicles 5 for which electrical power-feed reservations have been received have been loaded in a standby table, putting a plurality of vehicles 5 in a plurality of parking spaces, moving vehicles for which electrical power-feed reservations have been received to an electrical power-feed parking space 31 based on identification codes stored in the standby table, having the electrical power-feed circuit supply electrical power via the relay circuits, completing electrical power-feed when a specified condition is satisfied, and returning pallets 10 on which vehicles that have completed electrical power-feed are mounted to the parking spaces 30, it is possible, while vehicles 5 are parked in the parking spaces, to sequentially move a plurality of vehicles 5 that desire electrical power-feed to the electrical power-feed parking space and supply electrical power.
Also, by repeating operations of announcing exiting times, giving vehicles 5 for which electrical power-feed reservations have been received that have an approaching exiting time priority based on identity codes stored in the standby table and moving those vehicles to an electrical power-feed parking space 31, having the electrical power-feed circuit supply electrical power to the vehicles via the relay circuits, terminating electrical power-feed when a specified condition is satisfied, and returning pallets 10 on which vehicles for which electrical power-feed has been terminated have been loaded to the parking spaces 30, while the vehicles 5 are parked in parking spaces it is possible to sequentially move a plurality of vehicles that desire electrical power-feed to the electrical power-feed parking spaces and supply electrical power to them.

The present invention is not limited to the above-described embodiments, and various modifications are possible within a scope that does not depart from the spirit of invention
Description has been given with an elevator parking system as an example, but this is not limiting, and it is also possible to implement the present invention with other types of parking system.
Also, description has been given for situation provided with one electrical power-feed parking space, but this is not limited, and it is also possible to provide two or more electrical power-feed parking spaces.
It is also possible for a few vehicles, among vehicles that require parking, to require electrical power-feed.
It is also possible for a few vehicles, among vehicles that require electrical power-feed, to announce exiting times.
Also, description has been given of an example where a loading and unloading station provided as well as a plurality of parking spaces, but this is not limiting, and it is also possible, for example, for one parking space among a plurality of parking spaces to double as a loading and unloading station.

### Description of the numerals

- H: Lifting space
- 5: vehicle
- 6: Relay socket
- 10: pallet
- 20: Loading and unloading station
- 30: Parking space
- 40: Moving unit
- 41: lifter
- 42: Horizontal travel unit
- 42: Transverse feed rail
- 44: Vertical feed rail
- 45: lifter
- 50: Relay circuit
- 51: Relay terminal
- 52: Relay cable
- 53: relay plug
- 60: electrical power-feed circuit
- 61: electrical power-feed terminal
- 62: Electrical power-feed cable
- 63: electrical power-feed box
- 70: Control unit
- 71: Operation panel
- 72: control box
- 80: Relay circuit fixture

## Claims

1. A parking system for parking vehicles, comprising:
a plurality of parking spaces in which it is possible to place a plurality of vehicles respectively;
a moving unit for moving vehicles from one parking space among the plurality of parking spaces to another parking space;
a plurality of relay circuits provided respectively corresponding to the plurality of vehicles, and capable of respectively relaying electrical power to the vehicles; and
an electrical power-feed circuit for supplying electrical power to an electrical power-feed parking space, which is at least one parking space among the plurality of parking spaces, and supplying electrical power to a vehicle via the relay circuits provided in correspondence with the vehicles that have been placed in the electrical power-feed parking spaces, wherein
electrical power-feed reservations, being declarations of intent to the effect that it is desired to supply electrical power to a vehicle, are received for each vehicle, and after a vehicle for which the electrical power-feed reservation has been received has been moved from the parking space to the electrical power-feed parking space, the electrical power-feed circuit commences electrical power-feed to the vehicle via the relay circuit, and terminates electrical power-feed when a specified condition is satisfied.

2. The parking system disclosed in claim 1, further comprising a control unit that handles a plurality of corresponding identification codes so as to be able to respectively identify a plurality of vehicles, and controls the parking system,
wherein
the control unit respectively receives electrical power-feed reservations, being a declaration of intent to the effect that it is desired to feed electrical power to a vehicle, for every vehicle, stores additionally an identification code corresponding to a vehicle for which an electrical power-feed reservation has been received in the standby table, extracts one of the identification codes from among the plurality of identification codes stored in the standby table, and, when the electrical power-feed circuit has commenced electrical power-feed to the vehicle via the relay circuit after a vehicle corresponding to the extracted identification code has been moved from the parking space to the electrical power-feed parking space and terminated electrical power-feed once a specified condition has been satisfied, deletes the identification code corresponding to the vehicle for which electrical power-feed has been terminated from the standby table.

3. The parking system disclosed in claim 2, wherein the control unit causes announcement of exiting times of vehicles for which electrical power-feed reservations have been received and correlates the identification codes and the announced exiting times and stored them in the standby table, extracts, from among the plurality of identification codes stored in the standby table, an identification code for an approaching exiting time so as to give it priority, and when the electrical power-feed circuit has commenced electrical power-feed to the vehicle via a relay circuit after a vehicle corresponding to the extracted identification code has been moved from the parking space to the electrical power-feed parking space and terminated electrical power-feed once a specified condition has been satisfied, deletes the identification code corresponding to the vehicle for which electrical power-feed has been terminated from the standby table.

4. The parking system of claim 2, further comprising a plurality of relay circuit fixtures for respectively anchoring a part of the plurality of relay circuits,
wherein
the moving unit can move a relay circuit fixture and a vehicle from one of the plurality of parking spaces to another parking space in an integrated fashion.

5. A parking system for parking vehicles, comprising:
a plurality of pallets capable of being respectively loaded with a plurality of vehicles;
a plurality of parking spaces that are spaces in which it is possible to respectively place a plurality of pallets;
a moving unit that can move the pallets between one parking space among the plurality of parking spaces and another of the parking spaces;
a plurality of relay circuits respectively provided on the plurality of pallets, and capable of respectively supplying electrical power to vehicles loaded on the pallets;
an electrical power-feed circuit for supplying electrical power to an electrical power-feed parking space, which is at least one parking space among the plurality of parking spaces, and capable of feeding electrical power via the relay circuit provided on a pallet placed in the electrical power-feed parking space; and
a control unit for handling a plurality of corresponding identification codes so as to be able to respectively identify the plurality pallets, and controlling the parking system,
wherein
the control unit respectively receives electrical power-feed reservations, being a declaration of intent to the effect that it is desired to feed electrical power to a vehicle, for every vehicle, stores additionally an identification code, corresponding to the pallet on which a vehicle for which the electrical power-feed reservation has been received is loaded, in the standby table, extracts one of the identification codes from among the plurality of identification codes stored in the standby table, and, when the electrical power-feed circuit has commenced electrical power-feed to the vehicle via a relay circuit after a pallet corresponding to the extracted identification code has been moved from the parking space to the electrical power-feed parking space and terminated electrical power-feed once a specified condition has been satisfied, deletes the identification code corresponding to the pallet for which electrical power-feed has been terminated from the standby table.

6. The parking system disclosed in claim 5, wherein the control unit causes announcement of exiting times of vehicles for which the electrical power-feed reservations have been received, correlates the identification codes and the announced exiting times and stores them in the standby table, extracts, from among the plurality of identification codes stored in the standby table, an identification code for an approaching exiting time so as to give it priority, and when the electrical power-feed circuit has commenced electrical power-feed to the vehicle via a relay circuit after a pallet corresponding to the extracted identification code has been moved from the parking space to the electrical power-feed parking space, and terminated electrical power-feed once a specified condition has been satisfied, deletes the identification code corresponding to the pallet for which electrical power-feed has been terminated from the standby table.
